Europäisches Patentamt

**European Patent Office**

Office européen des brevets

(11) Publication number: **0 124 223**
A2

# EUROPEAN PATENT APPLICATION

(21) Application number: **84301663.5**

(22) Date of filing: **13.03.84**

(51) Int. Cl.³: **F 01 B 19/02, F 16 J 3/06**

(30) Priority: **27.04.83 US 489072**

(43) Date of publication of application: **07.11.84**
**Bulletin 84/45**

(84) Designated Contracting States: **DE FR GB**

(71) Applicant: **GENERAL MOTORS CORPORATION,
General Motors Building 3044 West Grand Boulevard,
Detroit Michigan 48202 (US)**

(72) Inventor: **Stuart, Richard J., 1701 Greenway Drive,
Anderson Indiana 46011 (US)**
Inventor: **Waite, Lynn E., 8777 Ridge Road, Gasport New
York 14067 (US)**

(74) Representative: **Breakwell, John Neil Bower et al, GM
Patent Section Luton Office (F6) P.O. Box No. 3 Kimpton
Road, Luton Beds. LU2 OSY (GB)**

(54) Diaphragm-operated motor.

(57) A diaphragm-operated motor (10) is disclosed having oppositely facing sides (12A, 12B) with similar mounting devices (58A, 58B) thereon and a common rod connector device (28A, 28B, 42A, 42B) accessible at each side for adapting the motor for selective mounting in oppositely facing positions and for selective connection of the diaphragm (16) an operating rod (41) at either side of the motor in either of the positions of the motor, whereby the motor is mountable and connectible for either rod push operation or rod pull operation in both of its mounting positions.

ACTORUM AG

DIAPHRAGM-OPERATED MOTOR

This invention relates to diaphragm-operated motors having mounting means and rod connector means.

Diaphragm-operated motors are generally designed with mounting means as well as rod connector means specific to a certain direction of push or pull operation of an operating rod by the motor. As a result, such motors are not universally adaptable for diverse applications. For example, in the adaptation of an air conditioning and heating system to various vehicle models, there may be a need to reverse the mounting and/or the rod connection of one or more of the diaphragm-operated vacuum motors used in the system. The conventional type of diaphragm-operated vacuum motor normally has a rod connection and mounting fastenings on the same or opposite sides of the motor, and is thus not normally adaptable to a reversal in mounting and/or rod connection without special modications.

The present invention is concerned with a diaphragm-operated motor which is universally adaptable to such needs.

To this end, a diaphragm-operated motor in accordance with the present invention is characterised by the measures specified in the characterising portion of claim 1.

The present invention thereby makes available a diaphragm-operated motor which is capable of being selectively mounted in oppositely facing positions and of having selective rod connection thereto at either side of the motor in both of its positions.

In a diaphragm-operated motor in accordance with the present invention, also, the design of the motor casing can readily be simplified to two common parts with integral fastening means, requiring no additional fastening assistance such as nuts or bolts.

The common rod connector means, in addition to its feature of permitting either rod push operation or rod pull operation as desired, may have a simple integrated snap-in fastening arrangement, or alternatively the motor may utilise a spring washer arrangement which allows visual inspection of the rod connection after final assembly of the motor.

In the drawings:

Figure 1 is a fragmentary sectional view, with parts in elevation, of a preferred embodiment of a diaphragm-operated motor in accordance with the present invention, installed on a panel;

Figure 2 is a fragmentary end view on the line 2-2 of Figure 1, in the direction of the arrows;

Figure 3 is a fragmentary view on the line 3-3 of Figure 1, in the direction of the arrows;

Figure 4 is a fragmentary view on the line 4-4 of Figure 3, in the direction of the arrows;

Figure 5 is a view similar to Figure 1 but showing the diaphragm in its opposite extreme position and also showing details of a selective rod connection; and

Figure 6 is a fragmentary sectional view showing details of an alternative form of selective rod connection.

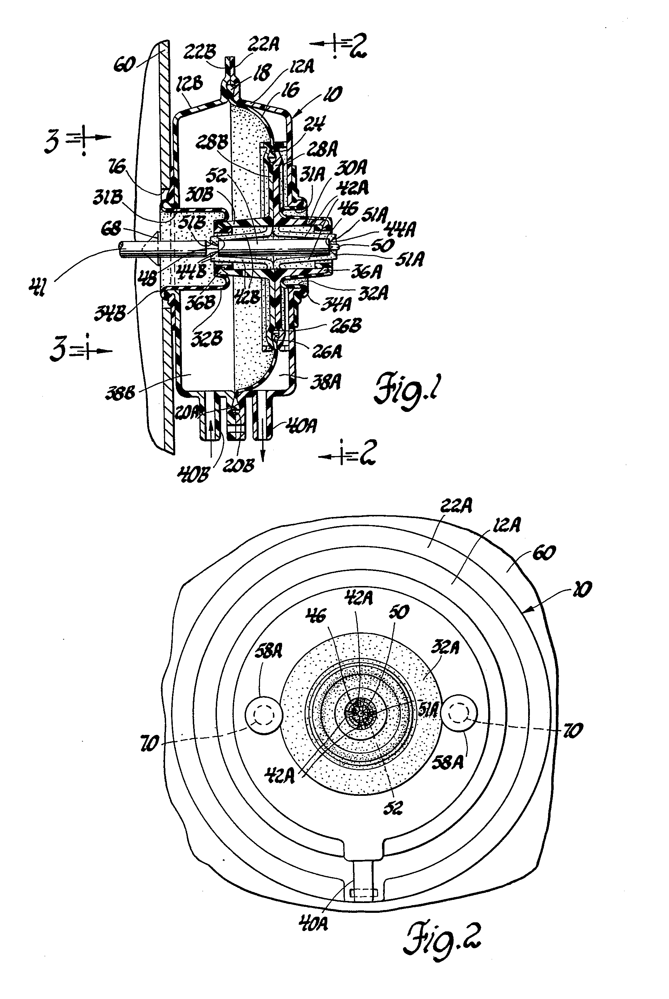

With reference to Figure 1 of the drawings, there is shown a diaphragm-operated motor, generally designated 10, that is constructed in accordance with the present invention and is adapted for use as a vacuum motor in a vehicle air conditioning and heating system for operating a device therein such as a mode door (not shown). The diaphragm-operated motor 10 comprises a pair of identical pan-shaped casting members 12A and 12B made of moulded plastics material. An open-centre (annular) diaphragm 16 made of moulded rubber has an outer beaded rim 18 sandwiched between and captured in complementary annular grooves 20A and 20B formed in the inner face of rims 22A and 22B of the respective casing members 12A and 12B. The casing member rims 22A and 22B are welded or bonded together where they have flat inner face engagement as shown, to sealingly retain the diaphragm in place. The diaphragm 16 also has an inner beaded rim 24 about its open centre, which rim is sandwiched between and captured in complementary annular grooves 26A and 26B in the inner faces of a pair of identical hub-like rod connector members 28A and 28B made of moulded plastics material. The rod connector members 28A and 28B are welded or bonded together where they have flat inner face engagement as shown, to sealingly retain the inner perimeter of the diaphragm 16. In addition, the rod connector members 28A and 28B have oppositely axially extending hub sections 30A and 30B respectively which are displaceable within openings 31A and 31B formed centrally in the respective casing members 12A and 12B.

The annular space in the respective openings 31A and 31B between the casing members 12A and 12B and the rod connector members 28A and 28B is sealed by means of a rolling-type annular seal 32A and 32B made of moulded rubber. The annular seals 32A and 32B are identical, and each have an elastic fit outboard of this annular space with a respective annular lip 34A and 34B formed on the respective casing member 12A and 12B about the central opening of the casing member. The annular seals 32A and 32B also each have an elastic fit inboard of this annular space and about their central opening with a respective annular barbed lip 36A and 36B formed on the outer end of the respective rod connector hub section 30A and 30B. The diaphragm 16 with the central rod connector members 28A and 28B thus sealingly secured thereto divides the casing 12A, 12B into identical chambers 38A and 38B at opposite sides of the diaphragm, and also supports the rod connector members for translation in the casing coaxially thereof.

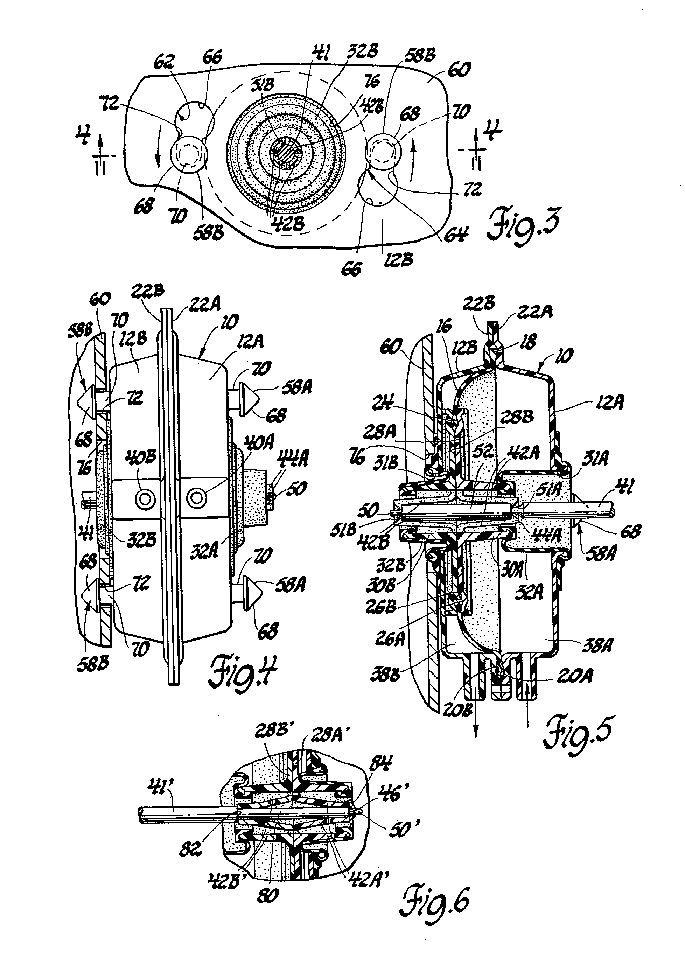

The diaphragm 16 is effective to translate the rod connector members in response to a pressure differential established across the diaphragm. To this end, the casing members 12A and 12B are formed with identical fittings 40A and 40B which extend radially from their side and communicate with the respective chambers 38A and 38B. In the use of the diaphragm-operated motor 10 as a vacuum motor, on evacuation of the chamber 38A through the fitting 40A while the chamber 38B is vented to atmosphere through its fitting 40B, the diaphragm 16 and the rod connector members 28A and 28B sealingly coupled thereto assume the position shown in Figure 1, with the seal 32A folded about the hub section 30A and the other seal 32B unfolded from the other hub section 30B. Alternatively, when the chamber 38A is vented and the chamber 38B is evacuated, the diaphragm 16 and thereby the rod connector assembly is moved leftwardly to the position shown in Figure 4: upon such movement, the annular seal 32B then folds on the hub section 30B and the other annular seal 32A unfolds from the hub section 30A.

Output from the diaphragm-operated motor 10 is in the form of either a push or a pull, depending on which side of the motor is connected to an operating rod 41 that transmits the desired motion to the device to be actuated. The direction of push or pull is made selective in the diaphragm-operated motor 10 by the rod connector members 28A and 28B each being provided with four equally angularly spaced radially inwardly extending flexible finger-like detent arms 42A and 42B, respectively. The detent arms 42A and 42B are formed integral with the inner end of the rod connector members 28A and 28B internally thereof, and extend axially outwardly towards their free end, where they are formed with hook ends 44A and 44B respectively. The operating rod 41, which is for the most part cylindrical, is provided with axially spaced radial shoulders 46 and 48 that are spaced apart an axial distance equal to that between the hook ends 44A and 44B of the detent arms 42A and 42B. The end portion 50 of the operating rod 41 extending to the radial shoulder 46 is formed with a reduced diameter and a rounded end, and the detent arms 42A and 42B are radially deflectable outwardly by forced engagement of this rounded rod end with a ramp portion 51A and 51B of the respective hook ends 44A and 44B. This permits the operating rod to be inserted in either side of the rod connector members 28A and 28B past the first set of hook ends. For example, in installation of the operating rod using the configuration shown in Figure 1, rod entry is past the first set of hook ends 44B, whereafter the rod is slid rightwardly until the rod shoulder 46 is engaged by the other hook ends 44A. The hook ends 44B then spring radially inwardly to engage the other rod shoulder 48, and thereby capture the cylindrical rod portion 52 between the rod shoulders 46 and 48.

With the diaphragm-operated motor 10 installed as shown in Figure 1, rightward movement of the diaphragm 16 pulls the rod rightwardly, whereas leftward movement of the diaphragm pushes the rod leftwardly. Alternatively, the rod can be inserted and connected at the opposite side of the casing, as shown in Figure 5. With this latter connection, leftward movement of the diaphragm pulls the operating rod towards the casing, whereas rightward movement pushes the rod away from the casing.

Universal attachment of the motor casing is made possible by each of the identical casing members 12A and 12B being formed with a pair of integral rosebud-shaped stud-like connector posts 58A and 58B which, as shown in Figures 2, 3 and 4, are located diammetrically opposite each other radially outwardly of the perimeter of the respective seals 32A and 32B. The posts 58A and 58B permit mounting of the diaphragm-operated motor 10 on a panel 60 without additional fastener devices, as shown in Figures 3 and 4. To this end, the panel 60, which is typical of the mounting structure available in the vehicle, is provided with a pair of identical but oppositely angularly oriented mounting holes 62 and 64. The holes 62 and 64 are of key-hole shape, each having an enlarged circular portion 66 for receiving the head 68 of either of the two posts 58A and 58B, whereafter the casing 12A, 12B is twisted to cause the stem portion 70 of the posts to be closely received by an arcuate slot portion 72 of the respective holes 62 and 64, the arcuate slot portions 72 being oriented at the same radius from the centreline of the motor and the length of the stem portions 70 being determined with respect to the panel thickness to provide a tight fit.

In the mounting arrangement shown, the panel 60 is provided with an opening 76 through which the actuating rod 41 extends when the rod is connected as shown in Figure 1 with the diaphragm-operated motor 10 on the right-hand side of the panel and attached by the posts 58B. On the other hand, when the rod is connected on the opposite side as shown in Figure 5, the rod extends away from the panel to the device to be actuated. Moreover, the motor 10 can also be mounted on the opposite, left-hand side of the panel by using the other posts 58A, again with either of the two possible rod connections.

An alternative construction for the rod connector is shown in Figure 6, wherein parts similar to those previously described are identified by the same reference numbers, but primed, and new parts are identified by new numbers. In the Figure 6 embodiment, the connector rod 41' is formed with a reduced-diameter portion 80 extending from a radial shoulder 82 to the shoulder 46' of the smaller-diameter end portion 50'. The detent arms 42A' and 42B' of the rod connector 28A', 28B' have no hooked ends, and simply slidably contact the rod along the reduced-diameter portion 80 following entry of the rod end portion 50'.  A spring washer 84 is then installed over the small-length reduced-diameter end portion 50' and against the shoulder 46' to capture the detent arms between the shoulder 82 and the spring washer 84.  In other respects the diaphragm-operated motor is the same as previously described.

Claims:

1. A diaphragm-operated motor having mounting means (58A, 58B) and rod connector means (28A, 28B, 42A, 42B), characterised in that the motor (10) has oppositely facing sides (12A,12B) provided with similar mounting means (58A,58B) on each side, and also has common rod connector means (28A,28B,42A,42B) accessible at each side for adapting the motor (10) for selective mounting in oppositely facing positions and for selective connection of the diaphragm (16) to an operating rod (41) at either of the said sides in both of the said positions, whereby the motor (10) is mountable and connectible for either rod push operation or rod pull operation in both of the said positions.

2. A diaphragm-operated motor according to claim 1, characterised in that the mounting means (58A and 58B) on the oppositely facing sides (12A and 12B) of the motor (10) are formed as stud-like mounting posts

3. A diaphragm-operated motor according to claim 1 or 2, characterised in that the common rod connector means (28A,28B,42A,42B) include two spaced sets of deflectable fingers (42A and 42B) provided with respective hook ends (44A and 44B), for selective mounting of the motor (10) on a panel (60) in either of two oppositely facing positions and for selective connection of the diaphragm (16) to the operating rod (41) at either of the said sides in both of the said positions by engagement of the hook ends (44A and 44B) of the fingers (42A and 42B) with axially spaced abutments (46 and 48) on the operating rod (41).

4. A diaphragm-operated motor according to claim 1 or 2, characterised in that the common rod connector means (42A',42B') include two spaced sets of deflectable fingers (42A' and 42B') accessible at each side for adapting the motor (10) for selective mounting of the motor (10) on a panel (60) in either of two oppositely facing positions and for selective connection of the diaphragm (16) to the operating rod (41) at either of the said sides in both of the said positions by engagement of one set of fingers (42B') with an abutment (82) on the rod (41) and engagement of the other set of fingers (42A') with a spring washer (84) mounted over one end of the rod (41).

Fig.1

Fig.2

0124223

0124223

2

Fig.3

Fig.4

Fig.5

Fig.6